# EUROPEAN PATENT APPLICATION

(11) **EP 4 090 000 A1**
(43) Date of publication of application: **16.11.2022**
(21) Application number: 21738023.7
(22) Date of filing: 08.01.2021
(51) Int. Cl.: H04N 5/232

(54) **METHOD AND DEVICE FOR IMAGE PROCESSING, ELECTRONIC DEVICE, AND STORAGE MEDIUM**

(30) Priority: 09.01.2020 CN 202010021644
(71) Applicant: Guangdong Oppo Mobile Telecommunications Corp., Ltd, DongGuan City, Guangdong 523860 (CN)
(72) Inventor: LI, Yichao, DongGuan City Guangdong 523860 (CN)
(74) Representative: Fassio, Valeria
(86) International application number: PCT/CN2021/070845
(87) International publication number: WO 2021/139764

(57) **Abstract**

Provided in the present application are a method and device for image processing, an electronic device, and a storage medium. The method comprises: acquiring a current frame of image captured by a camera and a motion parameter of a gyroscope when the current frame of image is being captured, determining an area of interest of the current frame of image, utilizing the area of interest of the current frame of image and the motion parameter of the gyroscope to determine a display area for a next frame of image and displaying a part of the display area of the next frame of image. When photographing per the present method, the region of interest of a preceding frame of image and a motion state of the gyroscope when the preceding frame of image is being captured are determined, a display area for a subsequent frame of image is determined on the basis of the area of interest of the preceding frame of image and of the motion state of the gyroscope; the display area for the subsequent frame of image is no longer fixed at the center of the field of view, but rather adjusted on the basis of the area of interest of the preceding frame of image and of the motion state of the gyroscope, thus facilitating the tracking of an object.

## Description

### TECHNICAL FIELD

The present disclosure relates to the field of image processing technologies, and in particularly, to an image processing method, an image processing apparatus, an electronic device, and a storage medium.

### BACKGROUND

With the popularity of smartphones, people's requirements for photographing functions of cameras of the smartphones are becoming higher and higher. At present, with an increasing of zooming multiple (also referred to as zooming magnification) of the camera of the smartphone, the camera has an extremely small angle of view when capturing at a high magnification. When capturing a video under a condition of high magnification, even if the camera shakes slightly, it will cause a display image to move sharply, resulting in it is difficult to track an object constantly.

### SUMMARY

### TECHNICAL PROBLEM

In order to solve the above-mentioned technical problem that the capturing of video under the condition of high magnification has an extremely small angle of view, and the slight shaking would cause sharp move of the display image and thereby make it be difficult to track the object constantly, embodiments of the present disclosure provide an image processing method, an image processing apparatus, an electronic device, and a storage medium.

### TECHNICAL SOLUTIONS

In a first aspect, an embodiment of the present disclosure provides an image processing method, including:
obtaining a current frame image captured by a camera and motion parameters of a gyroscope when capturing the current frame image;
determining a region of interest (Rol) of the current frame image; and
determining, based on the region of interest and the motion parameters of the gyroscope, a display area of a next frame image, and displaying the display area of the next frame image.

In a second aspect, an embodiment of the present disclosure provides an image processing apparatus, including:
an obtaining module, configured to obtain a current frame image captured by a camera and motion parameters of a gyroscope when capturing the current frame image;
a region of interest determining module, configured to determine a region of interest of the current frame image; and
a display area determining module, configured to determine, based on the region of interest and the motion parameters of the gyroscope, a display area of a next frame image, and display the display area of the next frame image.

In a third aspect, an embodiment of the present disclosure provides an electronic device, including: a processor, a memory and computer programs stored in the memory and executable by the processor, and the processor being configured to, when executing the computer programs, implement blocks of the image processing method according to the first aspect.

In a fourth aspect, an embodiment of the present disclosure provides a storage medium stored with computer programs, the computer programs being configured to, when being executed by a processor, implement blocks of the image processing method according to the first aspect.

### BENEFICIAL EFFECT

It can be seen from the above that the image processing method provided by the embodiment of the present disclosure includes: obtaining the current frame image captured by the camera and the motion parameters of the gyroscope when capturing the current frame image; determining the region of interest of the current frame image, determining, based on the region of interest of the current frame image and the motion parameters of the gyroscope, the display area of the next frame image, and displaying the display area of the next frame image. The method determines a region of interest of a previous frame image and a motion state of a gyroscope when capturing the previous frame image, and determines, based on the region of interest of the previous frame image and the motion state of the gyroscope, a next frame display image. Because the next frame display image is no longer fixed at a center of a field of view, but adjusted based on the region of interest of the previous frame image and the motion state of the gyroscope, it is relatively easy to track a specific object.

### BRIEF DESCRIPTION OF THE DRAWINGS

FIG. 1 illustrates a schematic structural block diagram of an electronic device.
FIG. 2a illustrates a schematic diagram of a cropping of a digital zooming.
FIG. 2b illustrates a schematic diagram of a cropped area after the cropping.
FIG. 2c illustrates a schematic diagram of the cropped area after being enlarged.
FIG. 3 illustrates a schematic flowchart of an image processing method according to an embodiment of the present disclosure.
FIG. 4 illustrates a schematic flowchart of an image processing method according to another embodiment of the present disclosure.
FIG. 5 illustrates a schematic structural diagram of an image processing apparatus according to an embodiment of the present disclosure.
FIG. 6 illustrates a schematic structural diagram of an electronic device according to an embodiment of the present disclosure.

### DETAILED DESCRIPTION OF EMBODIMENTS

In order to make purposes, features, and advantages of the present disclosure more obvious and understandable, technical solutions in the embodiments of the present disclosure will be clearly and completely described below in combination with the accompanying drawings in the embodiments of the present disclosure. Obviously, the described embodiments are only part of the embodiments of the present disclosure, not all the embodiments. Based on the embodiments in the present disclosure, all other embodiments obtained by those skilled in the art without creative work belong to the scope of protection of the present disclosure.

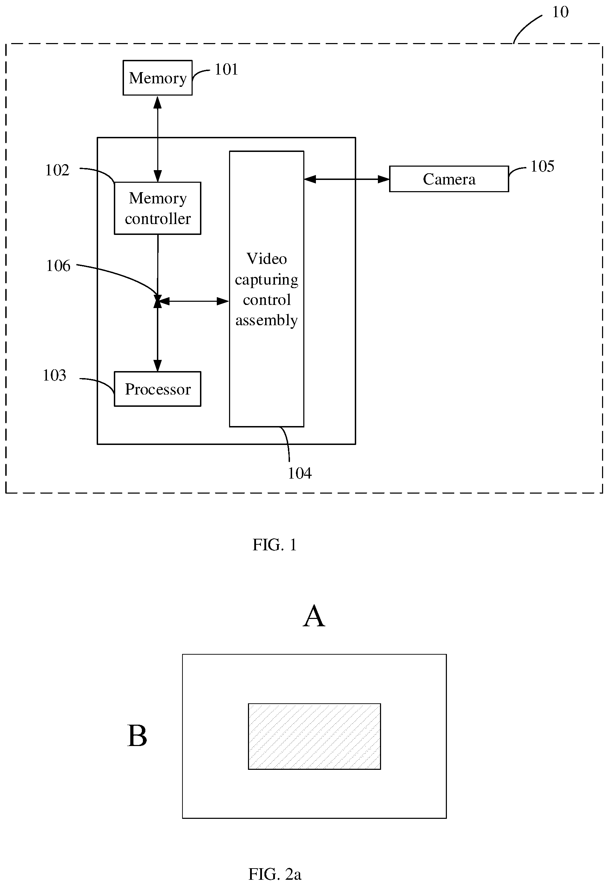

FIG. 1 illustrates a schematic structural block diagram of an electronic device. The image processing method provided by an embodiment of the present disclosure can be implemented by the electronic device 10 illustrated in FIG. 1. The electronic device 10 can include, but is not limited to: smart phones, tablets, smart cameras and wearing smart devices that need to rely on batteries to maintain normal operation and support photographing and display functions.

As illustrated in FIG. 1, the electronic device 10 includes a memory 101, a storage controller 102, one or more (only one illustrated in the figure) processors 103, an image capturing control assembly 104 (also referred to as image capturing controller, or image capturing control circuit), and one or more (only one illustrated in the figure) cameras 105. These components communicate with each other through one or more communication buses/signal lines 106.

It can be understood that the structure illustrated in FIG. 1 is only schematic and does not limit the structure of the electronic device. The electronic device 10 may also include more or fewer components than illustrated in FIG. 1, or have a different configuration from that illustrated in FIG. 1. The components illustrated in FIG. 1 can be implemented by hardware, software, or a combination thereof.

The memory 101 can be configured to store software programs and modules, such as instructions and modules corresponding to the image processing method and the image processing apparatus in the embodiments of the present disclosure. The processor 103 executes various functional applications and data processing by executing the software programs and the modules stored in the memory 101, that is, realizes the above image processing method and a function of each module in the image processing apparatus.

The memory 101 may include a high-speed random-access memory and may also include a nonvolatile memory, such as one or more magnetic storage devices, flash memories, or other nonvolatile solid-state memories. In some embodiments, the memory 101 may further include a memory remotely arranged relative to the processor 103, which may be connected to the electronic device 10 via a network. Examples of the network include but are not limited to the Internet, intranet, local area network (LAN), mobile communication network and their combinations. Access to the memory 101 by the processor 103 and other possible components may be performed under the control of the storage controller 102.

The image capturing control assembly 104 is configured to control the camera to capture and transmit the captured image data to the memory 101 or the processor 103 through the communication signal line 106. The camera 105 is configured to capture images or videos. The number of the camera 105 may be one or more.

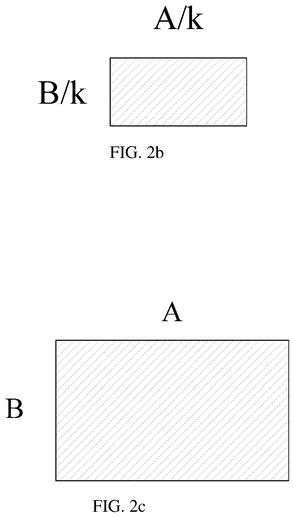

When the camera 105 captures an image, after a zooming multiple of the camera continues to increase and reaches a certain zooming multiple, the camera begins to adopt a digital zooming. An enlargement principle of the digital zooming is to increase an area of each pixel in an image at a center of a field of view, just as using an image processing software to increase an area of an image based on a certain proportion, and then cropping an image with the same size and the same center as the original image from the enlarged image for display. As illustrated in FIG. 2a, which illustrated a schematic diagram of a cropping of a principle of the digital zooming. A size of an original image is a rectangle with a length A and a width B. Assuming that a zooming multiple of the camera is k, a rectangle with a length A/k and a width B/k is cropped from the original image. At present, a center of a cropping area of the digital zooming is the same as a center of the original image. As illustrated in FIG. 2b, which illustrates a schematic diagram of the cropped area after the cropping, the cropped area is a rectangle with a length of A/k and a width of B/k. As illustrated in FIG. 2c, which a schematic diagram of the clipped area being enlarged by k times, and it is also a display image displayed in the display device. The enlargement principle of the digital zooming is to enlarge the image of the clipped area illustrated in FIG. 2b into the display image illustrated in FIG. 2c.

Because the center of the digital zooming is the same as the center of the original image, that is, the center of the display image is in the center of the field of view of the camera. In the case of the high magnification, when the camera vibrates slightly, the field of view of the camera will move sharply, and the display image will move sharply with the movement of the field of view, resulting in it is difficult to track an object.

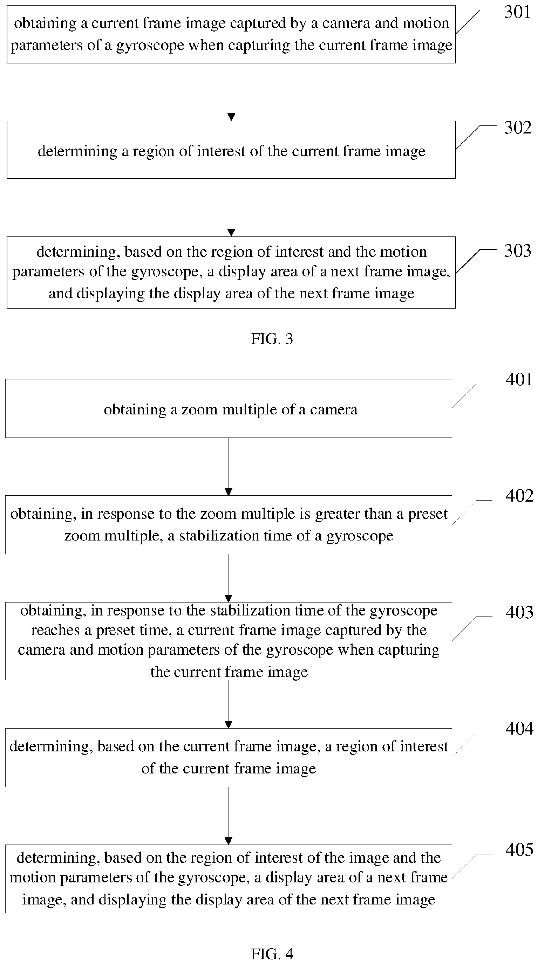

In view of this, based on the above electronic device 10, in order to solve the above technical problem that when capturing by the electronic device, slight shaking under the condition of high magnification would cause sharp move of the display image, and thereby make it be difficult to track the object constantly. An embodiment of the present disclosure provides an image processing method. As illustrated in FIG. 3, which illustrates a schematic flowchart of the image processing method according to an embodiment of the present disclosure, the method may begin from block 301 to block 303.

At the block 301, obtaining a current frame image captured by a camera and motion parameters of a gyroscope when capturing the current frame image.

In the embodiment of the present disclosure, during capturing the image, the electronic device extracts the current frame image captured by the camera and obtains the motion parameters of the gyroscope when capturing the extracted image. The motion parameters of the gyroscope reflect a motion state of the camera, that is, a jitter amplitude of the camera during the capturing. The motion parameters of the gyroscope include three-axis data of three-dimensional spatial coordinate axes.

At the block 302, determining, based on the currently frame image, a region of interest of the current frame image.

In the embodiment of the present disclosure, an image processing is performed on the extracted current frame image. The image processing can be an automatic processing by the processor of the electronic device based on a preset processing algorithm, or a specified processing based on a user's preference. The region of interest of the image is obtained after the image is processed.

At the block 303, determining, based on the region of interest of the image and the motion parameters of the gyroscope, a display area of a next frame image, and displaying the display area of the next frame image.

In the embodiment of the present disclosure, a previous frame image in the block 302 is processed to obtain the region of interest of the image, the region of interest is a capturing focus. The display area of the next frame image is adjusted based on a position of the capturing focus and the motion parameters of the gyroscope, and the display area of the next frame image is displayed.

The image processing method provided by the embodiment of the present disclosure includes: obtaining the current frame image captured by the camera and the motion parameters of the gyroscope when capturing the current frame image, determining, based on the current frame image, the region of interest of the current frame image, determining, based on the region of interest of the current frame image and the motion parameters of the gyroscope, the display area of the next frame image, and displaying the display area of the next frame image. Compared with the current display of the center of the field of view, when the camera vibrates slightly under the condition of high magnification, the display area moves sharply with the move of the field of view of the camera. The display area of this method is adjusted based on the region of interest of the previous frame image and the motion parameters of the gyroscope, therefore it is easier to track the object in the region of interest.

As illustrated in FIG. 4, which illustrates another schematic flowchart of an image processing method according to an embodiment of the present disclosure, the method may begin from block 401 to block 405.

At the block 401, obtaining a zooming multiple of a camera.

In the embodiment of the present disclosure, it can be understood that the zooming of the camera includes an optical zooming and a digital zooming. When the zooming multiple of the camera is small, the camera mostly adopts the optical zooming. However, when a zooming multiple reaches a certain zooming multiple, the digital zooming is adopted. The principle of the optical zooming is different from that of the digital zooming. In the actual capturing process, first the zooming multiple of the camera is determined, the zooming multiple of the camera is obtained, and then the further processing is carried out.

At the block 402, obtaining, in response to the zooming multiple is greater than a preset zooming multiple, a stabilization time of a gyroscope;

In the embodiment of the present disclosure, since the field of view of the camera is unstable when the camera moves sharply, it can be determined that the user has not tracked and captured a specific object. Therefore, before executing the image processing method provided in the present disclosure, first determining whether a motion state of the camera is stable. The motion state of the camera can be determined by a motion state of the gyroscope. Therefore, when the zooming multiple of the camera is greater than the preset zooming multiple, that is, when the camera is in the digital zooming, the stabilization time of the gyroscope is obtained.

At the block 403, obtaining, in response to the stabilization time of the gyroscope reaches a preset time, a current frame image captured by the camera and motion parameters of the gyroscope when capturing the current frame image.

In the embodiment of the present disclosure, when the stabilization time of the gyroscope reaches the preset time, it can be determined that the camera is in a basically stable state without much movement. At this time, the image captured by the camera and the motion parameters of the gyroscope when capturing the image are obtained.

At the block 404, determining, based on the current frame image, a region of interest of the current frame image.

At the block 405, determining, based on the region of interest of the image and the motion parameters of the gyroscope, a display area of a next frame image, and displaying the display area of the next frame image.

It can be understood that the block 404 and the block 405 are the same as the block 302 and the block 303 in the embodiment of FIG. 3, which will not be repeated here.

The obtaining the stabilization time of the gyroscope, includes:
obtain motion parameters of the gyroscope continuously;
determining, based on a change of the motion parameters of the gyroscope, a motion amount of the gyroscope; and
obtaining, in response to the motion amount of the gyroscope is less than a preset motion amount, a holding time for the motion amount of the gyroscope being less than the preset motion amount;
the holding time being the stabilization time of the gyroscope.

In the embodiment of the present disclosure, after it is determined that the zooming multiple of the camera is greater than the preset zooming multiple and the camera is in the digital zooming, the motion parameters of the gyroscope are continuously obtained. After the motion parameters of the gyroscope are obtained, the continuously obtained motion parameters are analyzed. The motion amount of the gyroscope can be calculated based on changes of the motion parameters of the gyroscope on the three-dimensional spatial coordinate axes, the motion amount include a displacement and a speed of the gyroscope. When the motion amount of the gyroscope is less than the preset motion amount, it is determined that the gyroscope is stable, that is, the state of the camera is stable, and it can be determined that the user is capturing for the tracked object at this time. Starting from a time when it is determined that the gyroscope is stable, the motion amount of the gyroscope is continuously calculated, and the holding time when the motion amount of the gyroscope is less than the preset motion is continuously recorded. This holding time is the stabilization time of the gyroscope.

It can be understood that the stabilization time of the gyroscope is not a fixed value, but a continuously increasing value. When the stabilization time of the gyroscope continues to increase and reaches the preset time, it starts to obtain the current frame image captured by the camera and the motion parameters of the gyroscope when capturing the current frame image. If the stabilization time of the gyroscope does not reach the preset time, and the motion amount of the gyroscope exceeds the preset motion amount, continuing to obtain the motion amount of the gyroscope until the motion amount of the gyroscope is less than the preset motion amount again, and recording the stabilization time of the gyroscope again. Moreover, when the stabilization time of the gyroscope reaches the preset time and the blocks 403, 404 and 405 are executed, the motion parameters of the gyroscope are still continuously obtained and the motion amount of the gyroscope is continuously detected. When it is detected that the motion amount of the gyroscope is greater than the preset motion amount, stopping the current operation and re-evaluating the stability of the gyroscope.

In an illustrated embodiment, the determining, based on the current frame image, the region of interest of the current frame image, includes:
partitioning the current frame image;
determining degrees of confidence of respective partitions of the current frame image; and
determining, based on the degrees of confidence of the current frame image, the region of interest of the current frame image.

In the embodiment of the present disclosure, the extracted current frame image is partitioned into multiple partitions, and the multiple partitions each are performed evaluation of degree of confidence based on a certain algorithm to determine the degree of confidence of each of the partitions. Finally, the region of interest of the current frame image is determined based on the degrees of confidence of the partitions. One or more of the partitions with a highest degree of confidence can be set as the region of interest. Of course, it can be understood that the region of interest of the current frame image can also be comprehensively determined based on the user's specification and results of the degree of confidence evaluation.

In an illustrated embodiment, the partitioning the current frame image, includes:
performing edge segmentation on the current frame image and extracting edges; and
partitioning, based on the extracted edges, the current frame image.

In the embodiment of the present disclosure, the current frame image is partitioned by using the edge segmentation method. Firstly, the edges of the current frame image are found by an edge detection operator. These edges mark discontinuous positions of the current frame image in gray, color, texture and so on. After extracting the edges, the extracted edge is processed and merged into an edge chain, and the image is segmented based on the edge chains. The partitions obtained by the edge segmentation can be regular graphics or irregular graphics.

In an illustrated embodiment, the determining degrees of confidence of respective partitions of the current frame image, includes:
obtaining a size of each of the partitions of the current frame image;
determining, based on an image content and a position of each of the partitions of the current frame image and times of each of the partitions appearing in the current frame image, a weight of each of the partitions of the current frame image;
determining, based on the size of each of the partitions and the weight of each of the partitions, the degree of confidence of each of the partitions of the current frame image.

In the embodiment of the present disclosure, first the size of each of the partitions obtained by the segmentation is determined, where the size can be an area size of each of the partitions of the current frame image. The area size of each of the partitions of the current frame image can be obtained by an area calculation formula of regular graphics, or by a cumulative amount of pixels in each of the partitions of image. After the size of each of the partitions of the current frame image is determined, the weight of each of the partitions of the current frame image is determined based on the image content and the image position of each of the partitions and the times of each of the partitions appearing in the current frame image. For example, for a specific target such as a face, a moon and a text, the weight can be set to high; for an object located in the center of the image, the weight can be set to medium; for another target that appear many times, the weight can be set to low. It is understandable that the weight can be set according to the user's needs or usage habits, and the example here is not limited. The user can not only classify the weight of the specific objects, but also set certain rules to calculate the weight of each partition.

After the size and the weight of each of the partitions are determined, the degree of confidence of each of the partitions is calculated based on the size and the weight of each of the partitions. The degree of confidence of each of the partitions can be determined by a multiplication product of the size of each of the partitions and the weight of each of the partitions. It can be understood that in order to reduce the amount of calculation and improve the operation efficiency of the system, the size of each of the partitions can be filtered, and the weight and the degree of confidence of the partition meeting a size requirement can be calculated. The partitions that are too small or too large in the size and clearly not available as the region of interest can be eliminated in advance.

In an illustrated embodiment, the determining, based on the region of interest of the current frame image and the motion parameters of the gyroscope when capturing the current frame image, the display area of the next frame image, includes:
determining, based on the region of interest, a minimum rectangular frame (also referred to as minimum rectangular box) containing the region of interest;
determining a center of the minimum rectangular frame;
moving, based on the motion parameters of the gyroscope, a center of the current frame image towards the center of the minimum rectangular frame to obtain a center of the display area of the next frame image.

In the embodiment of the present disclosure, the region of interest may be one or more partitions of the current frame image, which may be regular graphics or irregular graphics. The minimum rectangular frame that can contain all the partitions that make up the region of interest is determined based on these graphics that make up the region of interest. The minimum rectangular frame is determined to contain exactly the top, bottom, left and right of the region of interest. The center of the minimum rectangular frame is determined, and the center of the minimum rectangular frame is the center of the region of interest. Based on the motion parameters of the gyroscope when capturing the current frame, a displacement of the motion parameters in a plane of the current frame image can be calculated. The center of the current frame image is shifted X number of pixels toward the center of the region of interest to get a new center point, which is used as the center point of the display region of the next frame image. Where the value of X is positively related to the displacement of the motion parameters of the gyroscope in the plane of the current frame image.

In combination with the principle of the digital zooming disclosed in FIGS. 2a ~ 2c above, the method moves the center of the cropped area (i.e., the display area) of the next frame image by X number of pixels toward the center of the region of interest. The center of the display area is no longer fixed at the center of the field of view of the camera, but is adjusted toward the center of the region of interest based on the motion amount of the gyroscopic to reduce the motion amount between the display area and the region of interest, thus making a preview image more stable relative to the tracking object during the capturing.

It can be understood that the image processing method does not only process a single frame image. The next frame image in this paper can also be used as the current frame image in the next processing operation to process the next frame image, thereby to realize the continuous processing of the image. In addition, since the gyroscope is in a relatively stable state in the image processing process, and the motion amount of the field of view of the camera is small, the image processing can also be carried out once every N frames instead of continuous frame processing. For example, the first frame image, the sixth frame image and the eleventh frame image captured by the camera are extracted, and so on. The display area of the extracted sixth frame image is determined and displayed based on the first frame image, and then the display area of the eleventh frame image is determined and displayed based on the extracted sixth frame image. In this way, the power consumption of the processor of the electronic device can be reduced.

On the other hand, the image processing can directly process the extracted image, or reduce the image by m times before the processing. Similarly, this method can reduce the power consumption of the processor of the electronic device and improve the processing efficiency.

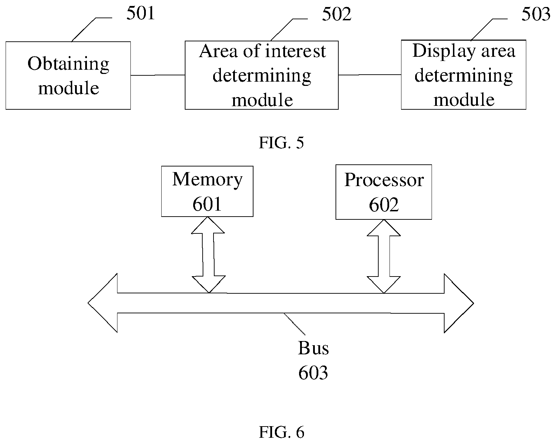

Referring to FIG. 5, which illustrates a schematic structural diagram of an image processing apparatus according to an embodiment of the present disclosure, and includes: an obtaining module 501, a region of interest determining module 502 and a display area determining module 503.

The obtaining module 501 is configured to obtain a current frame image captured by a camera and motion parameters of a gyroscope when capturing the current frame image.

The region of interest determining module 502 is configured to determine, based on the current frame image, a region of interest of the current frame image.

The display area determining module 503 is configured to determine, based on the region of interest and the motion parameters of the gyroscope, a display area of a next frame image, and display the display area of the next frame image.

In the embodiment of the present disclosure, it can be understood that the functions of each module of the image display device provided by the present disclosure are the same as those blocks in the image processing method provided by the embodiment of FIG. 3, and will not be repeated here.

Please refer to FIG. 6, which illustrates an electronic device provided by an embodiment of the present disclosure. The electronic device can be configured to implement the image processing method in the foregoing embodiments. As illustrated in FIG. 6, the electronic device mainly includes:
a memory 601, a processor 602, a bus 603 and computer programs stored in the memory 601 and executable by the processor 602. The memory 601 and the processor 602 are connected through the bus 603. When the processor 602 is configured to, when executing the computer programs, implement the image processing method in the above embodiment. The number of the processor can be one or more.

The memory 601 may be a high-speed random-access memory (RAM) or a non-volatile memory, such as a disk memory. The memory 601 is configured to store executable program codes, and the processor 602 is coupled with the memory 601.

In an illustrated embodiment, an embodiment of the present disclosure provides a storage medium, which can be arranged in the electronic device of the above embodiments, and the storage medium can be the memory in the above embodiment illustrated in FIG. 6.

Computer programs are stored in the storage medium, and the image processing method in the above embodiment is realized when the program is executed by the processor. In an illustrated embodiment, the storage medium can be a U disk, a mobile hard disk, a read only memory (ROM), a RAM, a magnetic disc or an optical disc and other media that can store program codes.

In the embodiments provided in the present disclosure, it should be understood that the disclosed devices and methods can be realized in other ways. For example, the device embodiments described above are only schematic. For example, the division of modules is only a logical function division. In actual implementation, there can be another division mode. For example, the multiple modules or components can be combined or integrated into another system, or some features can be ignored or not executed. On the other hand, the mutual coupling or direct coupling or communication connection shown or discussed can be indirect coupling or communication connection through some interfaces, devices or modules, and can be electrical, mechanical or other forms.

The modules described as separate components can be or may not be physically separated, and the components displayed as modules can be or may not be physical modules, that is, they can be located in one place or distributed to multiple network modules. Some or all of the modules can be selected according to the actual needs to achieve the purpose of the embodiments.

In addition, each functional module in each embodiment of the present disclosure can be integrated into one processing module, each module can exist separately, or two or more modules can be integrated into one module. The above integrated modules can be realized in the form of hardware or software function modules.

If the integrated module is realized in the form of software function module and sold or used as an independent product, it can be stored in a computer-readable storage medium. Based on this understanding, the technical solution of the present disclosure essentially or part of the technical solution that contributes to the related art or all or part of the technical solution can be embodied in the form of a software product, which is stored in a readable storage medium, It includes several instructions to enable a computer device (which can be a personal computer, server, network device, etc.) to perform all or part of the blocks of the methods of various embodiments of the present disclosure. The above-mentioned computer-readable storage medium include: a U disk, a mobile hard disk, a ROM, a RAM, a magnetic disk or an optical disk and other media that can store program codes.

It should be noted that the above method embodiments are expressed as a series of action combinations for simple description. However, those skilled in the art should be aware that the present disclosure is not limited by the action sequence described, because according to the present disclosure, some blocks can be carried out in other sequences or at the same time. Secondly, those skilled in the art should also know that the embodiments described in the specification belong to the illustrated embodiments, and the actions and modules involved are not necessarily necessary for the present disclosure.

In the above embodiments, the description of each embodiment has its own emphasis. For the parts not detailed in one embodiment, please refer to the relevant description of other embodiments.

The above is the description of the image processing method, the image processing apparatus, the electronic device, and the storage medium provided by the present disclosure. For those skilled in the art, there will be changes in the specific implementation mode and application scope according to the idea of the embodiments of the present disclosure. In conclusion, the contents of the specification should not be understood as restrictions on the present disclosure.

## Claims

1. A image processing method, comprising:
obtaining a current frame image captured by a camera and motion parameters of a gyroscope when capturing the current frame image;
determining a region of interest of the current frame image; and
determining, based on the region of interest and the motion parameters of the gyroscope, a display area of a next frame image, and displaying the display area of the next frame image.

2. The image processing method according to claim 1, wherein the obtaining a current frame image captured by a camera and motion parameters of a gyroscope when capturing the current frame image, comprises:
obtaining a zooming multiple of the camera;
obtaining, in response to the zooming multiple is greater than a preset zooming multiple, a stabilization time of the gyroscope; and
obtaining, in response to the stabilization time of the gyroscope is greater than a preset time, the current frame image captured by the camera and the motion parameters of the gyroscope when capturing the current frame image.

3. The image processing method according to claim 2, wherein the obtaining a stabilization time of the gyroscope, comprises:
obtaining motion parameters of the gyroscope continuously;
determining, based on a change of the motion parameters of the gyroscope, a motion amount of the gyroscope;
determining, in response to the motion amount of the gyroscope is less than a preset motion amount, the gyroscope being in a stable state; and
obtaining a holding time of the gyroscope in the stable state as the stabilization time of the gyroscope.

4. The image processing method according to claim 1, wherein the determining a region of interest of the current frame image, comprises:
partitioning the current frame image;
determining degrees of confidence of respective partitions of the current frame image; and
determining, based on the degrees of confidence of the respective partitions of the current frame image, the region of interest of the current frame image.

5. The image processing method according to claim 4, wherein the partitioning the current frame image, comprises:
performing edge segmentation on the current frame image and extracting edges; and
partitioning, based on the extracted edges, the current frame image.

6. The image processing method according to claim 4, wherein the determining degrees of confidence of respective partitions of the current frame image, comprises:
obtaining a size of each of the partitions of the current frame image;
determining, based on an image content and a position of each of the partitions of the current frame image and times of each of the partitions appearing in the current frame image, a weight of each of the partitions of the current frame image;
determining, based on the size of each of the partitions and the weight of each of the partitions, the degree of confidence of each of the partitions of the current frame image.

7. The image processing method according to any one of claims 1-6, wherein the determining, based on the region of interest and the motion parameters of the gyroscope, a display area of a next frame image, comprises:
determining, based on the region of interest, a minimum rectangular frame containing the region of interest;
determining a center of the minimum rectangular frame;
moving, based on the motion parameters of the gyroscope, a center of the current frame image towards the center of the minimum rectangular frame to obtain a center of the display area of the next frame image; and
determining, based on the center of the display area of the next frame image, the display area of the next frame image.

8. A image processing apparatus, comprising:
an obtaining module, configured to obtain a current frame image captured by a camera and motion parameters of a gyroscope when capturing the current frame image;
a region of interest determining module, configured to determine a region of interest of the current frame image; and
a display area determining module, configured to determine, based on the region of interest and the motion parameters of the gyroscope, a display area of a next frame image, and display the display area of the next frame image.

9. An electronic device, comprising: a processor, a memory and computer programs stored in the memory and executable by the processor; wherein the processor is configured to, when executing the computer programs, implement steps of the image processing method according to any one of claims 1-7.

10. A storage medium stored with computer programs, wherein the computer programs are configured to, when being executed by a processor, implement steps of the image processing method according to any one of claims 1-7.
